# EUROPEAN PATENT SPECIFICATION

(11) **EP 4 185 918 B1**
(45) Date of publication and mention of the grant of the patent: **25.11.2026**
(21) Application number: 21748541.6
(22) Date of filing: 15.07.2021
(51) Int. Cl.: G02C 7/02, G02C 7/10, G02C 7/12

(54) **METHOD FOR DECORATING AN OPHTALMIC ARTICLE AND RELATED OPHTALMIC ARTICLE**
VERFAHREN ZUM DEKORIEREN EINES OPHTHALMISCHEN ARTIKELS UND ZUGEHÖRIGER OPHTHALMISCHER ARTIKEL
PROCÉDÉ DE DÉCORATION D'UN ARTICLE OPHTALMIQUE ET ARTICLE OPHTALMIQUE ASSOCIÉ

(30) Priority: 23.07.2020 EP 20187350
(43) Date of publication of application: 31.05.2023
(73) Proprietor: Barberini S.p.A., 64028 Silvi (TE) (IT)
(72) Inventor: LAGASI, Matteo, 43121 Parma (IT)
(74) Representative: Iannone, Carlo Luigi
(86) International application number: PCT/EP2021/069817
(87) International publication number: WO 2022/017918

(56) References cited:
- EP-A1- 2 682 808
- EP-A1- 2 816 378
- EP-A1- 2 878 989
- EP-A2- 3 385 067
- WO-A1-2020/078964
- GB-A- 897 634
- US-A1- 2004 240 067
- US-A1- 2020 108 466
- US-A1- 2020 166 775
- LASSERE JASON: "PAL Markings to noticeable? - Vision Care Website Blog Article By Jason Lassere", 13 September 2019 (2019-09-13), XP055846199, Retrieved from the Internet <URL:https://www.visionvalet.com/blog/pal-markings-to-noticeable-61> [retrieved on 20210930]

## Description

The present invention relates to a method for decorating at least partially an ophthalmic article and a related finished ophthalmic lens.

The term "ophthalmic article" is specifically understood to mean a lens, corrective or otherwise, that can be used as spectacle glass, for spectacles for example, particularly sunglasses, goggles, visors or the like.

Eye- or sunglasses do not only have medical functions, in particular to protect the eye, to ease vision or to correct the vision of the wearer, but they are also used as "fashion item" and personalization is an important topic in this context.

Concerning the spectacle frames generally made of a plastic material or in part of metal, many decoration techniques are known and used for personalization and for transformation of the spectacle lenses into a fashion object.

However, concerning the lenses, decoration effects are much more limited and there are fewer techniques for decoration at hand, in particular techniques which are easy to implement, offer a wide range of decoration possibilities and at limited supplemental cost.

Today, decoration of the lenses often consists in applying for example an interference filter on the lenses to get a mirror effect or in tinting uniformly, or with a gradient, a substrate of the lens in adding a dye or specific pigments in the substrate material.

Methods and lenses of the prior art are disclosed in EP2682808A1 and US2020/166775A1.

With these techniques, it's difficult to get some "fancy" fashion effects.

The present invention therefore aims to propose a method for decorating an ophthalmic article that offers a large spectrum of possibilities at contained cost and manufacture facilities on an industrial level.

With this aim, the invention proposes a method for decorating an ophthalmic article as defined in claim 1.

It is thus possible to obtain surface decoration allowing a variety of decorative effects, in particular geometric pattern, which may be repetitive. With regard to prior art, a structure with an interferometric mirror does not provide discomfort to a wearer. In addition, using topographic structures having a height/ depth variation profile with respect to the mean first outer surface which is greater than a total thickness of the interferometric mirror allows enhancing the decoration effect.

The general concept behind the decoration method is that the topographic structures can be considered as "voluntary surface defects" created on the ophthalmic article. When depositing on said first outer surface thin layers having a refractive index different from the refractive index of the substrate to form an interferometric mirror on top of the first outer surface, such "voluntary surface defects" due to the topographic structures propagate through the deposited thin layers and will modify the optical transfer function of the interferometric mirror. The topographic structure is replicated by the thin layers and results an interferometric decorative pattern in the decoration zone.

As even small voluntary defects will finally imply "defects" in the interferometric mirror structure and its optical transfer function, quite very elaborated and complex pattern can be realized. Due to light refraction of incident light, one might observe even color changes in the decoration zone in function of the observation angle. Such an effect is in particular impossible to get with the teachings of prior art like for example in EP 2 682 808.

One may therefore understand that quite very fancy decorative effects can be realized through the above decoration method.

In an example, the decoration zone is distant of at least 15mm from the position of the eye corresponding to a mid-pupillary eye position of the user when the ophthalmic article is mounted in eyeglasses which are then worn by the user.

The decoration method may comprise one or several of the following aspects taken alone or in combination.

According to one aspect, the topographic structures comprise ribs and/or grooves, in particular with a width comprised in a range of 10-400µm, more specifically between 50-200µm.

The topographic structures may comprise at least one geometric form out of the following group: straight lines, curved lines, pyramids, needles.

The topographic structures have for example a height/ depth variation profile with respect to the mean first outer surface which is greater than a total thickness of the interferometric mirror.

The topographic structures may have height/ depth variation profile with respect to the mean first outer surface which is greater than 20µm and less than 200µm, in particular less than 100µm.

The topographic structures comprise for example at least one periodic pattern.

Providing an ophthalmic article comprises in particular a step of injection molding the ophthalmic article in a mold, where the mold part configured to form the first outer surface comprises in negative the topographic structures forming a decorative pattern appearing positive on the first outer surface.

According to a further aspect, the mold part may be configured to form the first outer surface comprises an interchangeable mold insert presenting in negative the topographic structures forming a decorative pattern appearing positive on the first outer surface.

Providing an ophthalmic article may comprise alternatively or in addition a step of engraving topographic structures.

Providing an ophthalmic article may comprise alternatively or in addition a step of depositing a rib through 3-D printing on the front face of a polished ophthalmic article.

Providing an ophthalmic article may comprise alternatively or in addition a step in depositing on the front face of a polished ophthalmic article a heated metal wire or grid in the decoration zone.

After depositing on the front face of a polished ophthalmic article a heated metal wire or grid in the decoration zone, the heated metal wire may be withdrawn.

The thin layers forming the interferometric mirror are for example deposited by PVD or CVD.

The interferometric mirror comprises for example between two and six thin layers.

The ophthalmic article may further comprise a polarizing layer.

The invention is also related to a finished ophthalmic lens as defined in claim 11 manufactured according a method as defined above.

The ophthalmic article may comprise a polarization layer.

The injection molded ophthalmic article further comprises in particular a layer of tinted plastic material.

The invention also relates to sunglasses comprising a finished ophthalmic lens as defined above, where the decoration zone is located outside the central vision zone of the ophthalmic article, in particular above the central vision zone of the user.

Other advantages and features will become apparent upon reading the description of the following figures, among which:
- figure 1 shows an example of a schematic cross section view of an ophthalmic article intended to be decorated,
- figure 2 is an exploded view of the layers of figure 1,
- figure 3 shows another example of a schematic cross section view of an ophthalmic article intended to be decorated,
- figure 4 shows an example of a flow-chart of the method for decorating at least partially an ophthalmic article,
- figure 5 shows an example of a schematic cross section view of an ophthalmic article intended to be decorated after a certain process step,
- figures 5-1, 5-2, 5-3 and 5-4 show examples of topographic structures and their length dimension,
- figure 5-5 shows a view in cross section of a detail of figure 5,
- figure 6 shows an example of a schematic cross section view of an ophthalmic article intended to be decorated after another process step,
- figure 7 shows an example of a top view of the ophthalmic article after another process step,
- figure 8 shows an example of a cross section of a mold for providing an ophthalmic article with topographic structures,
- figure 9 and 10 show an example of a decorated ophthalmic article obtained with the described method, and
- figure 11 shows a further example of a decorated ophthalmic article obtained with the described method.

A "topographic structure" in the present description can be considered as a three dimensional pattern with respect to an optically polished surface of the ophthalmic article.

On all the figures, the same elements bear the same reference numbers.

The following embodiments are only examples. Although the description refers to one or several embodiments, the invention is not limited to theses embodiments. In addition, a feature described in relationship with one embodiment may also concern another embodiment even if this is not mentioned expressively. Simple features of different embodiments may also be combined to provide further realizations within the scope of the claims.

In the present description, by "front" or "back" face of a layer, reference is made to the propagation of the rays of light towards the eye through the ophthalmic lens when an ophthalmic device bearing the ophthalmic lens is worn on a wearer's face. Thus a "front" face is always that which is closest directed toward the user's field of view and a "rear" face is always that which is closest to the eye of the user.

By "upstream" or "downstream" of two elements or layers, one refers to the propagation of the rays of light towards the eye in the same system as presented above. Thus, a first element is disposed upstream of a second element when the light passes through its path towards the eye of the user first through the first element and then through the second element. Conversely, a first element is disposed "downstream" of a second element when the light passes through its path towards the eye of the user first through the second element and then through the first element.

The terms "crystal" or "crystal glass" are understood to mean a glass/optical material of the class 0 according to the standardized international definition of glasses into five categories of light transmission. It is a glass having in the visible spectrum a light transmission range comprised between 80% and 100%.

The ophthalmic article 1 as shown in the figures is for example intended to be used for spectacles, in particular sunglasses. To do this, it is only necessary to shape the outer edge 3 according to the desired shape of the frame of the eyeglasses or sunglasses. Alternatively, and within the scope of the disclosure, the ophthalmic article may be intended for goggles, vision visors or the like.

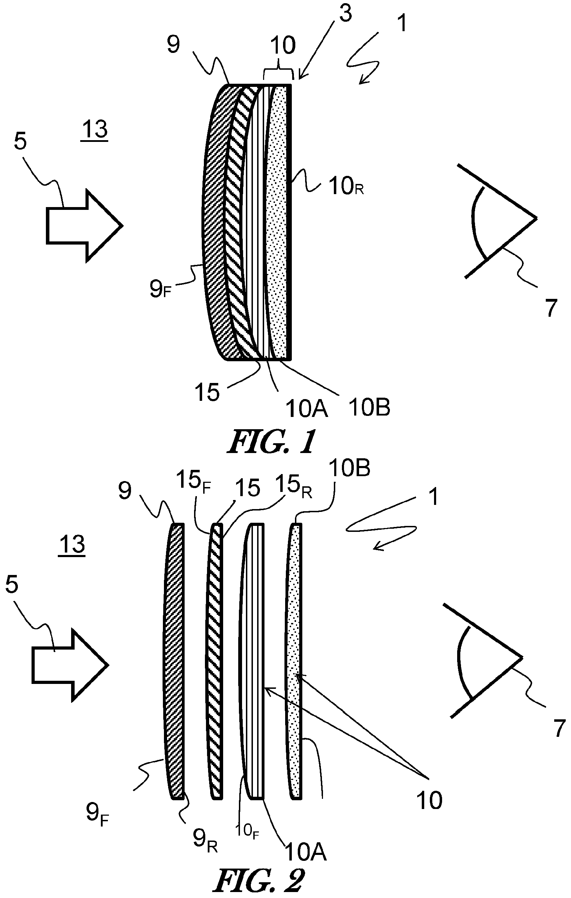

In FIGS. 1 and 2, the light incident on the ophthalmic article 1 and an eye 7 representing a user are shown by the arrow 5. The field of view 13 is thus situated on the side of the arrow 5 and the user looks through the ophthalmic article 1 with his eye 7.

By ophthalmic article 1 is meant a corrective lens or not (plano-lens), finished according to the the claimed subject-matter, or semi-finished, suitable for being mounted in a frame, for example a spectacle frame, goggles, a mask or a visor intended to be placed in front of the eyes and forming a screen of visual protection.

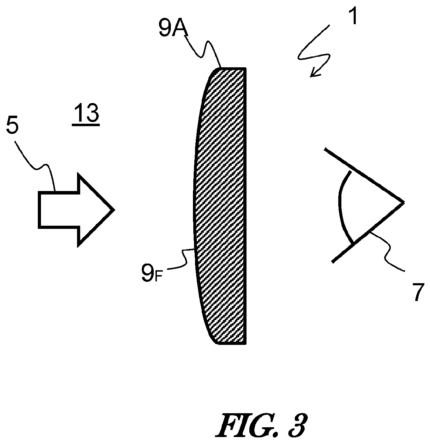

The ophthalmic article 1 comprises at least one layer or substrate (see for example figure 3).

As to the example shown in figures 1 and 2, an ophthalmic article 1 intended to be decorated has a first layer 9 (front layer) and a second layer 10 (rear layer). One or several third layer(s) 15 may be sandwiched between the first layer 9 and the second layer 10.

At this stage the ophthalmic article 1 which has not been submitted to deposition of thin layers forming an interferometric mirror, can be considered as a lens blank element.

In this context, treatments conferring additional functions, either alone or in combination among the following non-exhaustive list: shockproof, anti-scratch, anti-abrasion, anti-reflective on the surface of the lens opposite the one intended to be decorated, anti-fouling, anti-fogging, anti-static are not considered as additional layers. These additional functions can be carried out according to conventional methods (soaking, vacuum deposition, spin coating, spray coating, etc.).

Several of these treatments may be applied before, others after deposition of thin layers forming an interferometric mirror, either on the front or on the back of the ophthalmic article 1.

The first layer 9 is for example made of a plastic material, thermoset or thermoplastic plastic material, in particular made of polyamide (PA), like nylon or a polycarbonate.

The first layer has a rear face 9R to be oriented toward the eye 7 of the user and a front face 9F to be oriented toward the field of vision 13 of the user. The first layer 9 has a for example a thickness comprised between 0.05mm and 1mm and even 5mm, preferentially comprised between 0.1mm and 0.8 mm, preferentially between 0.15 mm and 0.5mm, for example 0.18mm.

In particular the front face 9F shall be decorated via the method outset in this application.

The second layer 10 is for example also made of a plastic material, thermoset or thermoplastic plastic material, in particular made of polyamide (PA), like nylon or a polycarbonate.

The second layer 10 has a rear face 10R to be oriented toward the eye 7 of a user and a front face 10F to be oriented toward the field of vision 13 of the user. The second layer 10 has for example a thickness comprised between 0.05mm and 1 mm or even 6mm, preferentially comprised between 0.05mm and 0.8 mm, preferentially between 0.1 mm and 0.5mm, for example 0.15mm. In that case, the ophthalmic article may be an optical film, dedicated to be applied onto or into a lens. Alternatively the second layer 10 has for example a thickness comprised between 0.5 mm and 5 mm, preferentially comprised between 1 mm and 4 mm, most preferably between 1.4 mm and 4 mm or even between 1.5 mm and 3 mm. In that case, the ophthalmic article may be an ophthalmic lens.

However, other thicknesses for layers 9 and 10 can be chosen in function for example of the optical correction of the ophthalmic article 1. In particular, if an optical correction is desired, one of the layers 9 and 10 may have a non-uniform thickness, so that its front face has a different curvature than its rear face.

As can be seen in figures 1 and 2, the first layer 9 is disposed proximate to the field of vision 13 of the user with regard to the second layer 10 that is disposed proximate to the eye 7 of the user.

Optional third layer 15 is for example made of a polarizing layer, in particular linearly polarizing polyvinyl alcohol which is disposed between the first layer 9 and the second layer 10. The third layer 15 may have a thickness comprised between 0.01mm and 1mm preferentially comprised between 0.02mm and 0.2 mm, for example 0.05mm or 0.07 mm.

The third layer 15 has a rear face 15R to be oriented toward the eye 7 of a user and a front face 15F to be oriented toward the field of vision 13 of the user.

When assembled, for example through thermoforming or injection molding, the rear face 9R of the first layer 9 is in contact with the front face 15F of the third layer 15 and the rear face 15R of the third layer 15 is in contact with the front face 10F of the second layer 10.

As shown in the figures, the second layer 10 may comprise a first sublayer 10A made of polyamide and a second sublayer 10B made of polyamide and disposed downstream the first sublayer. The second sublayer 10B has for example a thickness comprised between 0.5 mm and 5 mm, preferentially comprised between 1 mm and 4 mm, most preferably between 1.4 mm and 4 mm or even between 1.5 mm and 3 mm.

One of said first 10A or second 10B sublayers, in particular the first sublayer 10A is tinted by addition of a pigment or a colorant, whereas the other sublayer, in particular sublayer 10B which is to be closest to the eye of the user, is a non-tinted crystal sublayer. In this case, the pigment or colorant is chosen to filter out part of the incident light spectrum. Alternatively, the second layer does not comprise two sublayers and is either fully crystal clear or fully tinted.

This arrangement is interesting in case where for example the third layer 15 is only a polarizing layer and first sublayer 10A is then configured as a filter layer, for example to filter a specific wavelengths or wavelength ranges or according to a prescribed spectrum in order to fulfill the requirement of a standard, for example international standard ISO 12312 concerning eye protection and in particular sunglasses.

In this case the rear face 10R of the second layer 10 may be surface finished for a corrective optical effect.

As to a further, simpler alternative illustrated in figure 3, the ophthalmic article 1 may not comprise either of the second layer 10 and the optional third layer 15. The ophthalmic article 1 of said alternative is thus comprised mainly of a first layer 9A.

The substrate 9A has a for example a thickness comprised between 0.5 mm and 5 mm, preferentially comprised between 1 mm and 4 mm, most preferably between 1.4 mm and 4 mm or even between 1.5 mm and 3 mm.

The disclosure described in relation to layer 9, second layer 10 or second sublayer 10B may apply mutatis mutandis to substrate 9A. In this embodiment the ophthalmic article is in particular a plano lens, i.e. a lens considered without optical power. In another embodiment, the rear face 9R of the substrate 9A may be surface finished for a corrective effect.

The substrate 9A is for example made of a plastic material, thermoset or thermoplastic plastic material, in particular made of polyamide (PA), like nylon or a polycarbonate. Substrate 9A may be crystal clear, tinted or partially tinted.

In this context, treatments conferring additional function may also be applied.

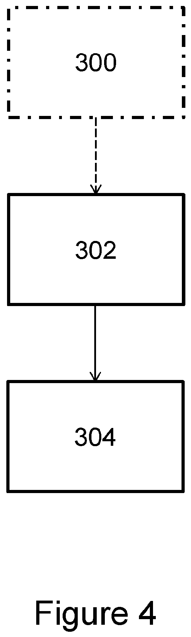

Turning to figure 4 showing an example of an embodiment of a method for decorating at least partially ophthalmic article 1.

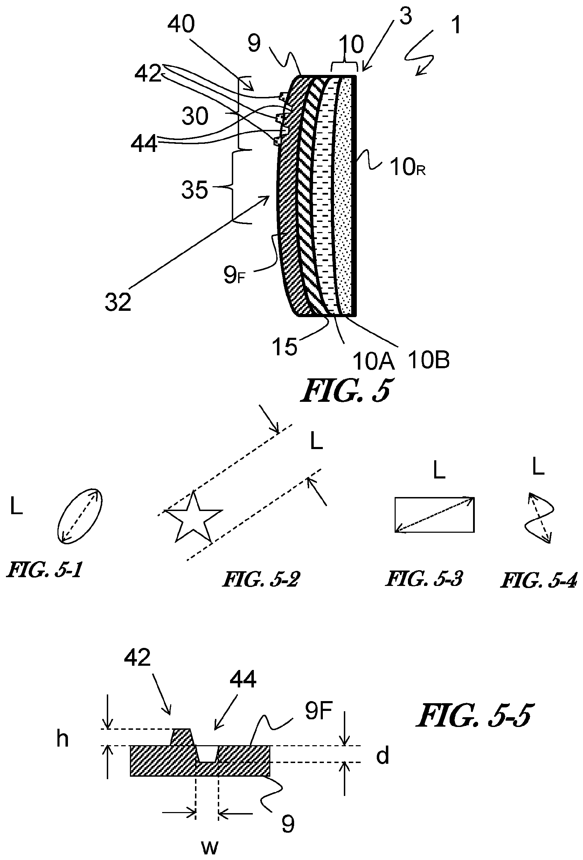

In a step 302, an ophthalmic article 1 as shown in figure 5 is provided having a substrate (first layer 9) with its first outer surface 9F intended to be oriented towards the field of view 5 of a user.

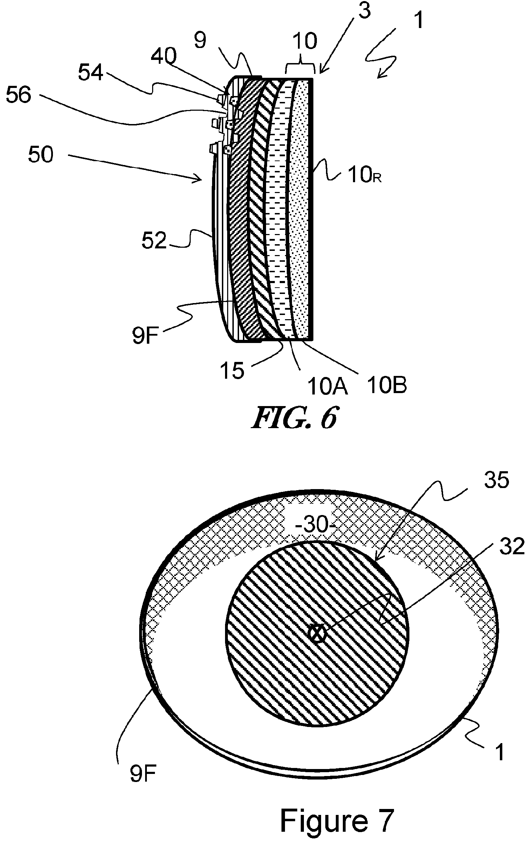

The ophthalmic article 1 of figure 5 differs from figure 1 and 2 by the fact that the outer surface, front face 9F, presents at least one decoration zone 30 distant of at least 15mm, in particular 20mm from center axis 32 of the ophthalmic article 1 which, in figure 7, is marked by an "X".

In general, the zones to be decorated are located outside the central vision zone 35 of the ophthalmic article 1. The central vison zone is defined as a circular or elliptic zone of about 15mm, or even 20mm around the center axis 32 of the ophthalmic article 1.Alternatively the decoration zone is distant of at least 15mm or even 20 mm from the position of the eye corresponding to a mid-pupillary eye position of the user when the ophthalmic article is mounted in eyeglasses which are then worn by the user. Indeed, in most cases, the ophthalmic lenses are mounted in eyeglasses frame such that the optical center of the lens is to be in front of the mid-pupillary eye position of the user when the eyeglasses are worn by the user"

As shown in figure 5, the front face 9F has topographic structures 40. The topographic structures 40 can be considered as "voluntary surface defects" that have been created on the ophthalmic article 1, for example the ophthalmic articles described in relationship with figures 1-3. At least one dimension of length "L" of the topographic structures 40, taken as such and not as a whole, is greater or equal to 1mm on the first outer surface 9F for forming a decorative pattern. This means there is at least one "voluntary surface defect" that is part of the topographic structures 40 that has at least one dimension of length which greater or equal to 1mm.

In the present example, the topographic structures 40 comprise ribs 42 and grooves 44 which are alternating in cross section. However, it is possible that the front face 9F of ophthalmic article 1 shows only ribs, or only grooves, or other combinations of patterns with for example a base pattern repeating itself in the decoration zone 30. The ribs 42 and grooves 44 have at least a length of 1mm.

Figures 5-1, 5-2, 5-3 and 5-4 show examples of topographic structures 40, in particular an ellipse (figure 5-1), a star (figure 5-2), a rectangle (figure 5-3) and a curved line (figure 5-4) with one length dimension L.

As shown in figure 5-5, the width w of such ribs 42 or grooves 44 may comprised in a range of 10-400µm, more specifically between 50-200µm.

In case, the topographic structures 40 are for example upstanding or incrusted pyramids or cabochons, the length dimension L as well as the width dimension w is determined with respect to the extension / footprint on front face 9F.

The topographic structures 40 comprise for example at least one geometric form out of the following group: straight lines, curved lines, pyramids, needles.

The height h / depth d variation profile as shown in figure 5-5 with respect to the mean first outer surface, front face 9F, is greater than 20µm and less than 200µm, in particular less than 100µm.

The topographic structures 40 comprise for example at least one periodic pattern, repeating itself on front face 9F at least several times.

The topographic structures 40 on front face 9F of the ophthalmic article 1 can be realized by different techniques for example implying mechanical, optical, chemical or molding techniques. The starting point may be an ophthalmic article as described in relationship with figures 1-3.

One possible technique consists to engrave the topographic structures 40 mechanically with a tool or optically with a laser on the front face 9F of a polished ophthalmic article 1, in particular as described in relationship to figures 1 to 3.

Another technique may imply 3-D printing techniques, for example with a 3-D printer, in order to deposit a rib 42 made in particular of the same material as the material of the layer 9 on the front face 9F of a polished ophthalmic article 1, in particular as described in relationship to figures 1 to 3.

In other cases, the technique may consist in depositing on the front face 9F of a polished ophthalmic article 1, in particular as described in relationship to figures 1 to 3, a heated metal wire or grid in zone 30 to be decorated, in particular of a noble metal like silver or gold, which locally will melt or soften the plastic material of layer 9 and creates as consequence the voluntary surface defects. One possibility is to withdraw the heated metal wire. This technique would be similar to a hot embossing technique. Another possibility is that the metal wire will stay embedded on the front face 9 and will contribute to fancy reflection effects on the finished ophthalmic article.

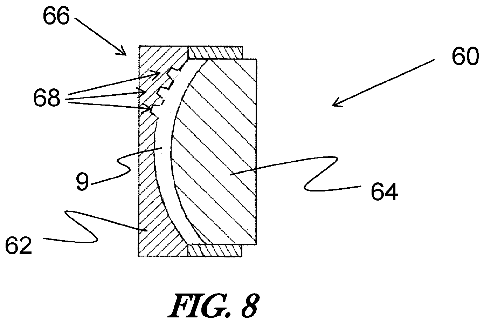

Quite another technique which is also well suited for high volume manufacturing is illustrated in figure 8 showing an injection molding installation 60 or injection mold comprising a concave mold 62 and a convex mold 64.

The molds 62 and 64 are made of polished metal, for example.

The concave mold 62 has been prepared and comprises in a zone 66 corresponding to the zone 30 to be decorated, the negative pattern 68 of the topographic structure 40, for example grooves for forming ribs or ribs for forming grooves.

Thus prior to step 302, in an optional step 300, the method may comprise a step of injection molding the ophthalmic article 1 in a molding installation 60.

The mold part, in this case the concave mold 62, which is configured to form the first outer surface (front face 9F), comprises in negative the topographic structures 40 forming a decorative pattern appearing positive on the first outer surface, the front face 9F.

According to one embodiment, the mold part 62 is an interchangeable mold insert presenting in negative the topographic structures forming a decorative pattern appearing positive on the first outer surface, the front face 9F.

Returning to figure 4, after step 302, the method comprises a step 304 for depositing on said first outer surface, front face 9F, thin layers 50 as shown in figure 6. These thin layers 50 have a refractive index different from the refractive index of the substrate (layer 9) to form an interferometric mirror 62 on top of the first outer surface, front face 9F. The interferometric mirror according to the claimed subject-matter is designed to reflect light in the visible domain, in particular between 450nm - 680nm.

The thin layers 50 forming the interferometric mirror 62 are for example deposited by PVD or CVD. The interferometric mirror 62 comprises in particular between two and six thin layers 50.

The thin layers 50 may comprise for example alternating layers of SiO2 and Ti2O3, SiO2 layers having for example a thickness of 70-250nm and Ti2O3 layers having for example a thickness of 40-80nm. Other materials known to the person skilled in the art may be used in place, such as ITO, Ta2O5, ZrO2, Ti3O5. Typically, the thickness of an interferometric mirror 62 is less than 1µm, for example less than 0.5µm.

The thin layers 50 which are deposited will conform to the shape of the topographic structures 40. Thus, at the level of a rib 42, the layers 50 will also form longitudinal protrusions 54 of similar form of the rib 42 and at the level of a groove 42, the layers 50 will also form longitudinal valleys 56 of similar form of the groove 42.

This will modify the optical transfer function of the interferometric mirror 52 in the decoration zone 30 with regard to a smooth polished surface without these voluntary defects. The topographic structure 40 is thus to some extent replicated by the thin layers 50 and results an interferometric decorative pattern in the decoration zone 30.

In general, the topographic structures 40 have a height h/ depth d variation profile with respect to the mean first outer surface, front face 9F which is greater than a total thickness of the interferometric mirror 62 (the stack of all thin layers 50). This means that the height h, the depth d or the sum of both (d+h) is greater than the total thickness of the interferometric mirror 62.

Figure 7 shows a top view of an example of a decorated ophthalmic article 1, for example as sunglass, with its decoration zone 30 which is located outside the central vision zone 35 of the ophthalmic article 1, in particular above central vision zone 35 of the user.

In this case, the topographic structures 40 were formed as ribs 42 or grooves 42 organized as a grid pattern.

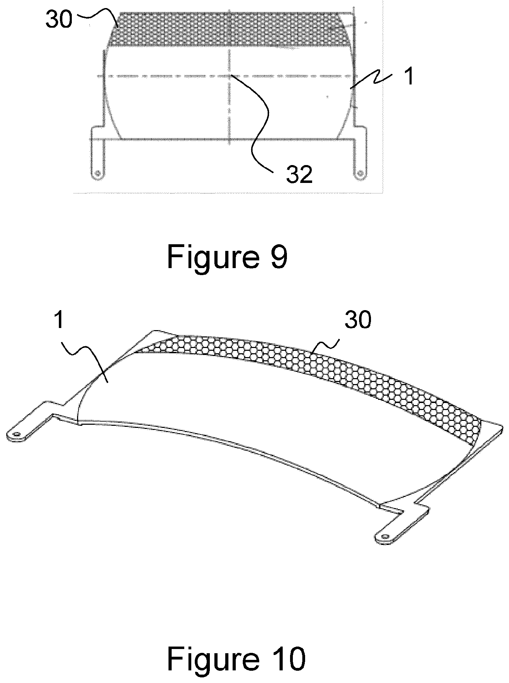

Figure 9 and 10 show another example of a decorated ophthalmic article 1, for example as sunglass, with its decoration zone 30 formed like a band shape, which is located outside the central vision zone 35 of the ophthalmic article 1, in particular above the central vision zone 35 of the user.

**In** this case, as the topographic structures 40 were formed as ribs 42 or grooves 42 organized as a honeycomb.

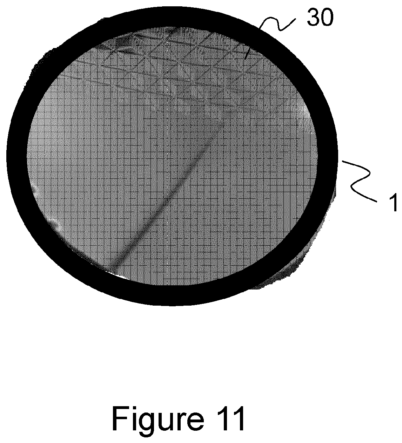

Figure 11 shows quite another example of a decorated ophthalmic article 1.

**In** this case, the topographic structures 40 were formed as ribs 42 or grooves 42 organized as a double diamond pattern, with a first meta-pattern of straight lines formed by grooves or ribs forming first diamond topographic structures 40 and with second smaller diamond pattern turned by 90°, similar to a leaf, inside of each meta-pattern.

Consequently the method described here above offers a very large spectrum of possibilities for decoration at contained cost and is easy to manufacture on an industrial level.

## Claims

1. Method of decorating an ophthalmic article (1) comprising the following steps of:
- providing an ophthalmic article (1) having a substrate (9) with a first outer surface (9F) intended to be oriented towards the field of view (5) of a user and presenting at least one decoration zone (30) outside the central vision zone (35) of the ophthalmic article (1) and having in said at least one decoration zone (35) topographic structures (40) of at least one dimension of length greater or equal to 1 mm on the first outer surface (9F) for forming a decorative pattern,
- depositing on said first outer surface (9F) thin layers (50) having a refractive index different from the refractive index of the substrate (9) to form an interferometric mirror (52) on top of the first outer surface (9F), wherein said interferometric mirror (52) is adapted to reflect light in the visible domain, wherein the topographic structures (40) have a height/ depth variation profile with respect to the mean first outer surface which is greater than a total thickness of the interferometric mirror (52).

2. Method according to claim 1, where the topographic structures (40) comprise ribs (42) and/or grooves (44), in particular with a width comprised in a range of 10-400µm, more specifically between 50-200µm.

3. Method according to claim 1 or 2, where the topographic structures (40) comprise at least one geometric form out of the following group: straight lines, curved lines, pyramids, needles.

4. Method according to any of claims 1 or 3, where the topographic structures (40) have height/ depth variation profile with respect to the mean first outer surface (9F) which is greater than 20µm and less than 200µm, in particular less than 100µm.

5. Method according to any of claims 1 to 4, where the topographic structures (40) comprise at least one periodic pattern.

6. Method according to any of claims 1 to 5, where providing an ophthalmic article (1) comprises a step of injection molding the ophthalmic article (1) in a mold (60), where the mold part (62) configured to form the first outer surface (9F) comprises in negative the topographic structures (40) forming a decorative pattern appearing positive on the first outer surface (9F).

7. Method according to claim 6, where the mold part (62) configured to form the first outer surface comprises an interchangeable mold insert presenting in negative the topographic structures forming a decorative pattern appearing positive on the first outer surface (9F).

8. Method according to any of claims 1 to 5, where providing an ophthalmic article (1) comprises at least one or several of the following steps:
- of engraving topographic structures (40),
- depositing a rib (42) through 3-D printing on the front face (9F) of a polished ophthalmic article (1)
- depositing on the front face (9F) of a polished ophthalmic article (1) a heated metal wire or grid in the decoration zone (30).

9. Method according to any of claims 1 to 8, where the thin layers (50) forming the interferometric mirror (52) are deposited by PVD or CVD.

10. Method according any of claims 1 to 9, where the ophthalmic article (1) further comprises a polarizing layer (15).

11. A finished ophthalmic lens manufactured according to a method as claimed in any of claims 1 - 10.

12. Finished ophthalmic lens according to claim 11, comprising a polarization layer (15).

13. Finished ophthalmic lens according to claim 11 or 12, that further comprises a layer of tinted plastic material.

14. Sunglasses comprising a finished ophthalmic lens according to any of claims 11 to 13, where the decoration zone (30) is located outside the central vision zone (35) of the ophthalmic article (1), in particular above the central vision zone (35) of the user.

## Patentansprüche

1. Verfahren zum Dekorieren eines ophthalmischen Artikels (1), die folgenden Schritte umfassend:
- Vorsehen eines ophthalmischen Artikels (1), der ein Substrat (9) mit einer ersten Außenfläche (9F) aufweist, die dazu bestimmt ist, zum Sichtfeld (5) eines Benutzers ausgerichtet zu sein, und mindestens eine Dekorzone (30) außerhalb der zentralen Sichtzone (35) des ophthalmischen Artikels (1) vorsieht und in der mindestens einen Dekorzone (35) topographische Strukturen (40) mit mindestens einer Längenabmessung von größer gleich 1 mm auf der ersten Außenfläche (9F) zum Bilden eines dekorativen Musters aufweist,
- Auftragen dünner Schichten (50) mit einem Brechungsindex, der sich vom Brechungsindex des Substrats (9) unterscheidet, auf der ersten Außenfläche (9F), um einen interferometrischen Spiegel (52) auf der ersten Außenfläche (9F) zu bilden, wobei der interferometrische Spiegel (52) dazu eingerichtet ist, Licht in der sichtbaren Domäne zu reflektieren, wobei die topographischen Strukturen (40) ein Höhen-/Tiefenvariationsprofil mit Bezug auf die mittlere erste Außenfläche aufweisen, das größer als die Gesamtdicke des interferometrischen Spiegels (52) ist.

2. Verfahren nach Anspruch 1, wobei die topographischen Strukturen (40) Rippen (42) und/oder Rillen (44) umfassen, insbesondere mit einer Breite, die in einem Bereich von 10-400 µm, genauer gesagt zwischen 50-200 µm, liegt.

3. Verfahren nach Anspruch 1 oder 2, wobei die topographischen Strukturen (40) mindestens eine geometrische Form aus der folgenden Gruppe umfassen: Geraden, Kurven, Pyramiden, Nadeln.

4. Verfahren nach einem der Ansprüche 1 oder 3, wobei die topographischen Strukturen (40) ein Höhen-/Tiefenvariationsprofil in Bezug auf die mittlere erste Außenfläche (9F) aufweisen, das größer als 20 µm und kleiner als 200 µm, insbesondere kleiner als 100 µm, ist.

5. Verfahren nach einem der Ansprüche 1 bis 4, wobei die topographischen Strukturen (40) mindestens ein periodisches Muster umfassen.

6. Verfahren nach einem der Ansprüche 1 bis 5, wobei das Vorsehen eines ophthalmischen Artikels (1) einen Schritt des Spritzgießens des ophthalmischen Artikels (1) in einer Form (60) umfasst, wobei das Formteil (62), das zum Ausbilden der ersten Außenfläche (9F) ausgelegt ist, die topographischen Strukturen (40) als Negativ umfasst, die ein dekoratives Muster bilden, das als Positiv auf der ersten Außenfläche (9F) erscheint.

7. Verfahren nach Anspruch 6, wobei das Formteil (62), das zum Bilden der ersten Außenfläche ausgelegt ist, einen austauschbaren Formeinsatz umfasst, der die topographischen Strukturen als Negativ vorsieht, die ein dekoratives Muster bilden, das als Positiv auf der ersten Außenfläche (9F) erscheint.

8. Verfahren nach einem der Ansprüche 1 bis 5, wobei das Vorsehen eines ophthalmischen Artikels (1) mindestens einen oder mehrere der folgenden Schritte umfasst:
- Gravieren von topographischen Strukturen (40),
- Auftragen einer Rippe (42) durch 3D-Druck auf die Vorderseite (9F) eines polierten ophthalmischen Artikels (1),
- Auftragen eines erwärmten Metalldrahts oder Gitters auf der Vorderseite (9F) eines polierten ophthalmischen Artikels (1) in der Dekorzone (30).

9. Verfahren nach einem der Ansprüche 1 bis 8, wobei die dünnen Schichten (50), die den interferometrischen Spiegel (52) bilden, durch PVD oder CVD aufgebracht werden.

10. Verfahren nach einem der Ansprüche 1 bis 9, wobei der ophthalmische Artikel (1) ferner eine polarisierende Schicht (15) umfasst.

11. Fertige ophthalmische Linse, die nach einem Verfahren nach einem der Ansprüche 1-10 hergestellt ist.

12. Fertige ophthalmische Linse nach Anspruch 11, umfassend eine polarisierende Schicht (15).

13. Fertige ophthalmische Linse nach Anspruch 11 oder 12, ferner umfassend eine Schicht aus getöntem Kunststoffmaterial.

14. Sonnenbrille, umfassend eine fertige ophthalmische Linse nach einem der Ansprüche 11 bis 13, wobei sich die Dekorzone (30) außerhalb der zentralen Sichtzone (35) des ophthalmischen Artikels (1) befindet, insbesondere oberhalb der zentralen Sichtzone (35) des Benutzers.

## Revendications

1. Procédé de décoration d'un article ophtalmique (1) comportant les étapes suivantes:
- la fourniture d'un article ophtalmique (1) ayant un substrat (9) avec une première surface externe (9F) destinée à être orientée vers le champ de vision (5) d'un utilisateur et présentant au moins une zone de décoration (30) à l'extérieur de la zone de vision centrale (35) de l'article ophtalmique (1) et ayant dans ladite au moins une zone de décoration (35) des structures topographiques (40) d'au moins une dimension de longueur supérieure ou égale à 1 mm sur la première surface externe (9F) pour la formation d'un motif décoratif,
- le dépôt sur ladite première surface externe (9F) de couches minces (50) ayant un indice de réfraction différent de l'indice de réfraction du substrat (9) pour former un miroir interférométrique (52) sur le dessus de la première surface externe (9F), ledit miroir interférométrique (52) étant adapté pour réfléchir la lumière dans le domaine visible, les structures topographiques (40) ayant un profil de variation hauteur/profondeur par rapport à la première surface externe moyenne qui est supérieur à une épaisseur totale du miroir interférométrique (52).

2. Procédé selon la revendication 1, les structures topographiques (40) comprenant des nervures (42) et/ou des rainures (44), en particulier avec une largeur comprise dans une plage de 10 à 400 µm, plus précisément entre 50 et 200 µm.

3. Procédé selon la revendication 1 ou 2, les structures topographiques (40) comprenant au moins une forme géométrique parmi le groupe suivant : lignes droites, lignes courbes, pyramides, aiguilles.

4. Procédé selon l'une quelconque des revendications 1 ou 3, les structures topographiques (40) ayant un profil de variation hauteur/profondeur par rapport à la première surface externe moyenne (9F) qui est supérieur à 20 µm et inférieur à 200 µm, en particulier inférieur à 100 µm.

5. Procédé selon l'une quelconque des revendications 1 à 4, les structures topographiques (40) comprenant au moins un motif périodique.

6. Procédé selon l'une quelconque des revendications 1 à 5, la fourniture d'un article ophtalmique (1) comprenant une étape de moulage par injection de l'article ophtalmique (1) dans un moule (60), la partie de moule (62) configurée pour former la première surface externe (9F) comprenant en négatif les structures topographiques (40) formant un motif décoratif apparaissant positif sur la première surface externe (9F).

7. Procédé selon la revendication 6, la partie de moule (62) configurée pour former la première surface externe comprenant un insert de moule interchangeable présentant en négatif les structures topographiques formant un motif décoratif apparaissant positif sur la première surface externe (9F).

8. Procédé selon l'une quelconque des revendications 1 à 5, la fourniture d'un article ophtalmique (1) comprenant au moins une ou plusieurs des étapes suivantes :
- la gravure de structures topographiques (40),
- le dépôt d'une nervure (42) par impression 3D sur la face avant (9F) d'un article ophtalmique poli (1)
- le dépôt sur la face avant (9F) d'un article ophtalmique poli (1) d'un fil ou une grille métallique chauffé dans la zone de décoration (30).

9. Procédé selon l'une quelconque des revendications 1 à 8, les couches minces (50) formant le miroir interférométrique (52) étant déposées par PVD ou CVD.

10. Procédé selon l'une quelconque des revendications 1 à 9, l'article ophtalmique (1) comprenant en outre une couche polarisante (15).

11. Lentille ophtalmique finie fabriquée selon un procédé selon l'une quelconque des revendications 1 à 10.

12. Lentille ophtalmique finie selon la revendication 11, comprenant une couche de polarisation (15).

13. Lentille ophtalmique finie selon la revendication 11 ou 12, qui comprend en outre une couche de matière plastique teintée.

14. Lunettes de soleil comportant une lentille ophtalmique finie selon l'une quelconque des revendications 11 à 13, la zone décorative (30) étant située à l'extérieur de la zone de vision centrale (35) de l'article ophtalmique (1), en particulier au-dessus de la zone de vision centrale (35) de l'utilisateur.
